# EUROPÄISCHE PATENTSCHRIFT

(11) **EP 3 398 814 B1**
(45) Veröffentlichungstag und Bekanntmachung des Hinweises auf die Patenterteilung: **07.06.2023**
(21) Anmeldenummer: 18159093.6
(22) Anmeldetag: 28.02.2018
(51) Int. Cl.: B60Q 1/50, B60Q 1/32, B60Q 1/26

(54) **VERFAHREN ZUM BETREIBEN EINER VON AUSSEN SICHTBAREN BELEUCHTUNG EINES KRAFTFAHRZEUGS SOWIE KRAFTFAHRZEUG ZUR DURCHFÜHRUNG DES VERFAHRENS**
METHOD FOR OPERATING ILLUMINATION VISIBLE FROM THE OUTSIDE OF A MOTOR VEHICLE AND MOTOR VEHICLE FOR CARRYING OUT THE METHOD
PROCÉDÉ DE FONCTIONNEMENT DE L'ÉCLAIRAGE VISIBLE DE L'EXTÉRIEUR D'UN VÉHICULE AUTOMOBILE AINSI QUE VÉHICULE AUTOMOBILE PERMETTANT LA MISE EN OEUVRE DUDIT PROCÉDÉ

(30) Priorität: 03.05.2017 DE 102017207435
(43) Veröffentlichungstag der Anmeldung: 07.11.2018
(73) Patentinhaber: VOLKSWAGEN AKTIENGESELLSCHAFT, 38440 Wolfsburg (DE)
(72) Erfinder: Sturmat, Sandra, 38102 Braunschweig (DE)

(56) Entgegenhaltungen:
- DE-A1- 19 745 993
- DE-A1-102005 044 404
- DE-A1-102010 045 070
- DE-A1-102011 014 262
- DE-A1-102011 083 368
- DE-U1-202013 000 685
- KR-A- 20130 085 806
- US-A- 5 838 259
- US-A1- 2010 302 020
- US-A1- 2016 016 506
- US-B1- 6 231 217

## Beschreibung

Die Erfindung betrifft ein Verfahren zum Betreiben einer von außen sichtbaren Beleuchtung eines Kraftfahrzeugs mit den Merkmalen vom Oberbegriff des Patentanspruchs 1. Die Erfindung betrifft ferner ein Kraftfahrzeug zur Durchführung des Verfahrens.

Bei dem Kauf heutiger Kraftfahrzeuge spielen für die Kunden Eigenschaften wie zum Beispiel Sportlichkeit, Sparsamkeit, Sicherheit, Umweltverträglichkeit, Preis und Design eine wichtige Rolle. Zum Design gehört auch das entsprechende Lichtdesign eines Kraftfahrzeugs, welches beispielsweise durch die Form und Anordnung eines Tagfahrlichts beeinflusst wird.

Überdies ist es in jüngster Zeit aus dem allgemeinen Stand der Automobiltechnik auch bekannt geworden, zur markenspezifischen Individualisierung eines Kraftfahrzeugs bewegtes Licht als sogenannte Coming-Home-Funktion und/oder Leaving-Home-Funktion einzusetzen.

So kann beispielsweise beim Öffnen eines Kraftfahrzeugs mittels eines Funkschlüssels vor Fahrtantritt (Leaving Home) ein Lauflicht erzeugt werden, welches sich in Längs-, Quer- und/oder Höhenrichtung des Kraftfahrzeugs bewegt. Ein entsprechendes Lauflicht ist bei Verriegeln des Kraftfahrzeugs mittels des Funkschlüssels nach Beendigung der Fahrt und nach dem Verlassen des Kraftfahrzeugs (Coming Home) denkbar.

Aus der DE 197 45 993 A1 ist ein Verfahren mit den Merkmalen vom Oberbegriff des Patentanspruchs 1 bekannt geworden. Konkret wird dort ein Kraftfahrzeug vorgeschlagen, welches an seiner Außenhaut der Fahrzeugkarosserie mit Elektrolumineszenz-Leuchtbändern ausgestattet ist, die sich entlang des Fahrzeugstraks von einem frontseitigen Scheinwerfer bis zu einer Heckleuchte durchgängig erstrecken. Die Leuchtbänder sind aus einer Vielzahl kleiner, individuell ansteuerbarer Einzelsegmente aufgebaut. Durch entsprechende Ansteuerung kann somit ein Lauflicht erzeugt werden, welches in Abhängigkeit von bestimmten Fahrmanövern durchgeführt wird. Insbesondere wird vorgeschlagen, dass bei einem Einpark- oder Ausparkmanöver des Kraftfahrzeugs das Lauflicht so betrieben wird, dass dessen Laufrichtung der jeweiligen Fahrtrichtung des Fahrzeugs entspricht.

In der EP 1 916 154 B1 wird ein Verfahren zur Informationsdarstellung beschrieben, bei dem eine selektive Projektion von Lichtbildern außerhalb eines Kraftfahrzeugs durchgeführt wird. Dabei erfolgt eine Veränderung der Projektion in Abhängigkeit einer bestimmten Fahrsituation. Beispielsweise wird vorgeschlagen, dass ein Kraftfahrzeug ein Abbiegevorhaben durch ein auf die Fahrbahn projiziertes Pfeilsymbol anzeigt. Durch das angezeigte Pfeilsymbol ist somit für andere Verkehrsteilnehmer ersichtlich, dass das Kraftfahrzeug in eine bestimmte Richtung abbiegen wird.

KR 20130085806 A offenbart ein Verfahren zum Betreiben einer von außen sichtbaren Beleuchtung eines Kraftfahrzeugs. Hierbei können eine Vielzahl von Leuchtbereichen sequentiell nacheinander angesteuert werden, wobei eine sequentielle Veränderung in Abhängigkeit einer Fahrtrichtung des Kraftfahrzeuges erfolgt.

DE 10 2011 083 368 A1 offenbart eine Fahrzeugleuchte, bei der eine Fahrzeugscheibe als Lichtleiter zwischen einer Lichtquelle und einer Auskoppelstelle verwendet wird.

DE 20 2013 000 685 U1 und DE 10 2010 045 070 A1 offenbaren jeweils Leuchtanordnungen für Fahrzeuge bei denen in eine Fahrzeugscheibe mittels wenigstens einer Lichtquelle eine Lichtemission eingekoppelt werden kann.

Ausgehend von dem genannten Stand der Technik ist es Aufgabe der vorliegenden Erfindung, ein Verfahren zum Betreiben einer von außen sichtbaren Beleuchtung eines Kraftfahrzeugs bereitzustellen, welches zu einer markenspezifischen Individualisierung eines Kraftfahrzeugs beiträgt. Diese Aufgabe wird mit den Merkmalen von Patentanspruch 1 gelöst.

Es ist ferner Aufgabe der Erfindung, ein geeignetes Kraftfahrzeug vorzuschlagen, welches das erfindungsgemäße Verfahren durchführen kann. Diese Aufgabe wird mit den Merkmalen von Patentanspruch 7 gelöst.

Vorteilhafte Weiterbildungen beziehungsweise Ausbildungen der Erfindung sind den jeweils abhängigen Ansprüchen zu entnehmen.

Die Erfindung geht zunächst aus von einem Verfahren zum Betreiben einer von außen sichtbaren Beleuchtung eines Kraftfahrzeugs. Dabei erfolgt der Betrieb derart erfolgt, dass eine Vielzahl von Leuchtbereichen sequentiell nacheinander derart verändert wird, dass in Bezug auf das Kraftfahrzeug ein sich in einer Längsrichtung des Kraftfahrzeugs kontinuierlich veränderndes Lichterscheinungsbild erzeugt wird.

Die Leuchtbereiche können dabei beispielsweise unmittelbar durch eine Vielzahl von Leuchtmitteln, wie beispielsweise Leuchtdioden (LEDs) gebildet werden. Es ist aber auch denkbar, dass die Leuchtbereiche nur indirekt gebildet werden, beispielsweise durch Optiken, welche entsprechenden Leuchtmitteln nachgeschaltet sind. Auch ist vorstellbar, dass die Leuchtbereiche durch Lichtauskoppelstrukturen in lichtleitenden Elementen, durch Leuchtfolien oder dergleichen gebildet werden, wobei die Aufzählung nicht abschließend sein soll.

Die Erfindung schlägt nun vor, dass die sequentielle Veränderung der Leuchtbereiche bei einem Losfahren des Kraftfahrzeugs derart erfolgt, dass sich das Lichterscheinungsbild mit zumindest einem Veränderungs-Grenzbereich in Bezug auf das Kraftfahrzeug entgegen dessen momentanen Fahrtrichtung bewegt.

Schließlich wird auch dadurch ein höchst einprägsamer optischer Effekt erzielt werden, wenn Leuchtbereiche innerhalb der Flächen der Seitenfenster sequentiell verändert werden. Bei Losfahren kann dann beispielsweise der Eindruck erweckt werden, als ob ein "Lichtvorhang" von den vorderen Fenstern hin zu den hinteren Fenstern aufgezogen wird.

Startet das Fahrzeug also in eine gewöhnliche Fahrtrichtung (vorwärts), so bewegt sich der Veränderungs-Grenzbereich rückwärts, also in Richtung des Fahrzeughecks. Fährt das Kraftfahrzeug aus dem Stand rückwärts, so wird der Veränderungs-Grenzbereich nach vorne, also in Richtung der Scheinwerfer des Kraftfahrzeugs bewegt.

Auf Grund dieses Verfahrens ist ein höchst originelles Lichterscheinungsbild erzeugbar, welches vorzüglich zur markenspezifischen Individualisierung eines Kraftfahrzeugs beitragen kann.

Dabei ist darauf hinzuweisen, dass der Veränderungs-Grenzbereich ein solcher Bereich ist, in dem sich ein bestimmter Leuchtbereich gerade von einem bestimmten Zustand in einen anderen Zustand verändert. Der Zustand kann dabei beispielsweise durch die Höhe der Leuchtintensität und/oder durch die Farbe des abgestrahlten Lichts charakterisiert sein.

Die Erfindung schlägt vor, dass die sequentielle Veränderung der Leuchtbereiche mit einer momentanen Fahrgeschwindigkeit des Kraftfahrzeugs derart synchronisiert wird, dass in Bezug auf das Kraftfahrzeug eine Geschwindigkeit des sich entgegen der momentanen Fahrtrichtung bewegenden Veränderungs-Grenzbereichs der momentanen Fahrgeschwindigkeit entspricht. Mit anderen Worten werden die Leuchtbereiche also derart verändert, dass ein Beobachter den Eindruck hat, der Veränderungs-Grenzbereich würde quasi stillstehen.

Dies führt letztendlich zu dem Eindruck für einen seitlich auf das Kraftfahrzeug blickenden Beobachter, dass das losfahrende Kraftfahrzeug aus "seinem Lichtkleid" herausfährt.

Sehr deutlich kann dies dadurch realisiert werden, wenn gemäß einer anderen Weiterbildung des Erfindungsgedankens die sequentielle Veränderung der Leuchtbereiche durch ein Ausschalten der Leuchtbereiche bewirkt wird. Die Lichtintensität des aus den Leuchtbereichen beziehungsweise diesen zugeordneten Leuchtmitteln austretenden Lichts wird also schlagartig auf null reduziert.

Der Effekt kann aber auch dadurch realisiert werden, indem die sequentielle Veränderung der Leuchtbereiche durch eine spürbare Erhöhung oder Reduzierung der Lichtintensität des aus den Leuchtbereichen austretenden Lichts oder auch durch einen Wechsel von einer bestimmten Farbe in eine andere bestimmte Farbe des aus den Leuchtbereichen austretenden Lichts bewirkt wird.

Eine höchst einprägsame und originelle Wirkung durch das Verfahren kann dann erzielt werden, wenn zusätzliche entlang einer seitlichen Fensterlinie vorhandene Leuchtbereiche sequentiell im Sinne der Erfindung verändert werden. Die seitliche Fensterlinie kann dabei lediglich die Fensterbrüstung, also die Linie unterhalb des Fensters umfassen. Es ist aber auch denkbar, dass die Fensterlinie auch die Linie oberhalb der Seitenfenster umfasst.

Ähnlich wirkungsvoll wird das Verfahren ausgestaltet, wenn zusätzliche in einem seitlichen Strakverlauf der Karosserie vorhandene Leuchtbereiche sequentiell verändert werden. Die Leuchtbereiche können sich dann vorzugsweise seitlich am Kraftfahrzeug beginnend von der Motorhaube, über die A-Säule, entlang des Daches und bei Kraftfahrzeugen mit Stufenheck schließlich entlang der C-Säule und entlang des Kofferraumdeckels erstrecken.

Ein guter optischer Effekt ist ferner auch dadurch erzielbar, wenn zusätzliche Leuchtbereiche von seitlichen Anbauteilen sequentiell verändert werden. Die seitlichen Anbauteile können beispielsweise Außenspiegel, Türgriffe oder auch Zierleisten sein.

Wie bereits erwähnt, soll mit der Erfindung jedoch auch ein Kraftfahrzeug zur Durchführung des erfindungsgemäßen Verfahrens unter Schutz gestellt werden. Ein zur Durchführung des Verfahrens geeignetes Kraftfahrzeug weist eine Vielzahl von Leuchtbereichen entlang einer Längsrichtung des Kraftfahrzeugs auf, durch die in Bezug auf das Kraftfahrzeug ein sich in Längsrichtung des Kraftfahrzeugs kontinuierlich veränderndes Lichterscheinungsbild erzeugbar ist. Die Leuchtbereiche können durch Leuchtmittel, wie beispielsweise LEDs oder auch folienartige Leuchtmittel, wie beispielsweise Elektrolumineszenzfolien oder OLED-Folien (OLED=Organische lichtemittierende Dioden) bestehen oder auch einfach durch lichtabstrahlende Bereiche, zu denen das Licht von verwendeten Leuchtmitteln hingeführt wird.

Das Kraftfahrzeug ist nun durch wenigstens eine Steuereinrichtung zur sequentiellen Ansteuerung von Leuchtmitteln zur Veränderung der Leuchtbereiche gekennzeichnet. Dabei sind durch die Steuereinrichtung Signale wenigstens eines Radsensors derart auswertbar, dass die Steuereinrichtung die Ansteuerung der Leuchtmittel bei einem Losfahren des Kraftfahrzeugs derart durchführt, dass sich das Lichterscheinungsbild in Bezug auf das Kraftfahrzeug mit zumindest einem Veränderungs-Grenzbereich entgegen dessen momentanen Fahrtrichtung bewegt.

Erfindungsgemäß wird die Ansteuerung der Leuchtmittel bei einem Losfahren des Kraftfahrzeugs derart durchgeführt, dass in Bezug auf das Kraftfahrzeug eine Geschwindigkeit des sich entgegen der momentanen Fahrtrichtung bewegenden Veränderungs-Grenzbereichs der momentanen Fahrgeschwindigkeit vom Kraftfahrzeug entspricht. Dabei kann die Steuereinrichtung die Signale eines Radsensors auswerten.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt.

Es zeigen, jeweils schematisch
- Fig. 1: eine Darstellung eines Kraftfahrzeugs beim Losfahren aus dem Stand, welches nach dem erfindungsgemäßen Verfahren betrieben wird,
- Fig. 2: ein Diagramm zur Darstellung des Zusammenhangs zwischen Fahrzeuggeschwindigkeit und Geschwindigkeit des Veränderungs-Grenzbereichs vom Lichterscheinungsbild,
- Fig. 3: die Darstellung eines Kraftfahrzeugs zur Durchführung des erfindungsgemäßen Verfahrens,
- Figuren 4: die Darstellung eines losfahrenden Kraftfahrzeugs mit einem sich verändernden Lichterscheinungsbild entlang seiner Fensterbrüstung, die nicht Teil der Erfindung sind;
- Figuren 5: ein losfahrendes Kraftfahrzeug mit sich veränderndem Lichterscheinungsbild in den Flächen der Seitenfenster und
- Figuren 6: ein losfahrendes Kraftfahrzeug mit einem sich verändernden Lichterscheinungsbild im Karosserie-Strakverlauf und in einer Zierleiste im Bereich der Türschweller, die nicht Teil der Erfindung sind.

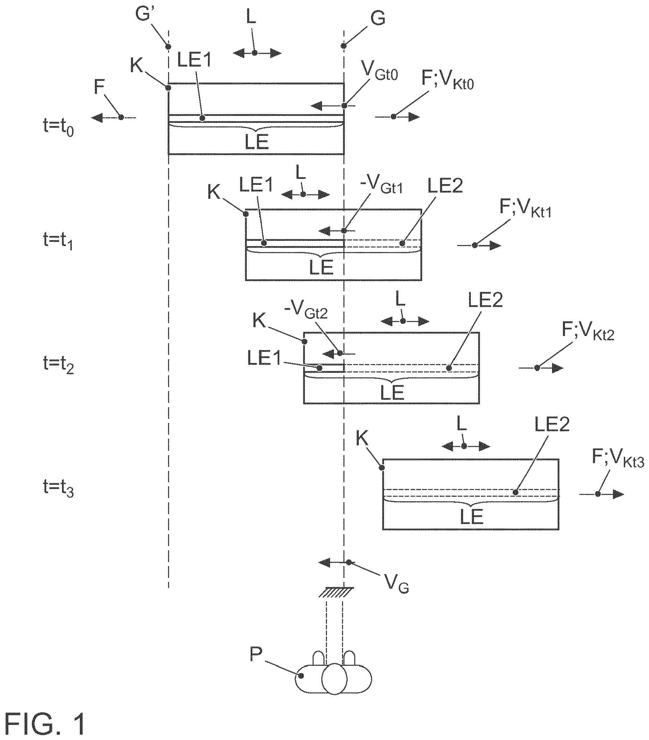

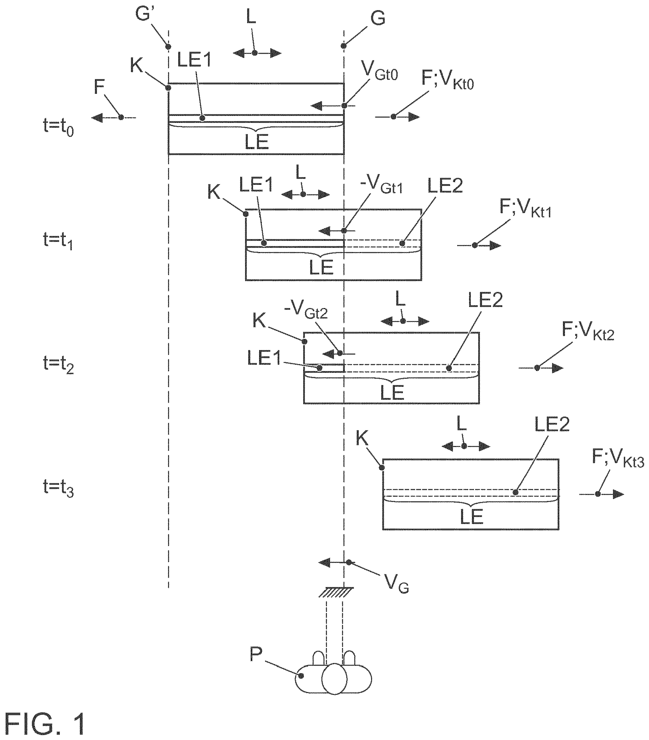

Zunächst wird auf die Fig. 1 Bezug genommen. Dort ist ein Kraftfahrzeug K zu vier Zeitpunkten einer Zeit t (t0 bis t3) dargestellt. Zum Zeitpunkt t = t0 befindet sich das Kraftfahrzeug K im Stillstand, weist also eine Geschwindigkeit V_{Kt0} von null auf.

Das Kraftfahrzeug K hat eine Längserstreckung beziehungsweise Längsrichtung L. Entlang der Längsrichtung L erstreckt sich auch ein Lichterscheinungsbild LE, wobei mit LE1 ein leuchtender Teil des Lichterscheinungsbildes LE und mit LE2 ein nicht leuchtender Teil des Lichterscheinungsbildes LE beziffert ist.

Wie ersichtlich ist, ändert sich mit einem Losfahren des Kraftfahrzeugs K das Lichterscheinungsbild LE derart, dass zusätzlich zum leuchtenden Teil LE1 des Lichterscheinungsbildes LE ein nicht leuchtender Teil LE2 hinzukommt. Dabei vergrößert sich der nicht leuchtende Teil LE2 mit zunehmender Zeit t, bis schließlich das Lichterscheinungsbild LE nur noch aus dem nicht leuchtenden Teil LE2 besteht. Mit G ist ein Veränderungs-Grenzbereich beziffert, der den jeweiligen Übergang vom leuchtenden Teil LE1 zum nicht leuchtenden Teil LE2 des Lichterscheinungsbildes LE kennzeichnet.

Dieser Veränderungs-Grenzbereich G weist eine Geschwindigkeit V_{G} auf, die zu den ausgewählten Zeitpunkten t0 bis t3 jeweils einer Geschwindigkeit V_{Gt0}, V_{Gt1} und V_{Gt2} entspricht. Die Geschwindigkeit V_{G} ist einer Fahrtrichtung F beziehungsweise den Fahrgeschwindigkeiten V_{Kt0} bis V_{Kt3} des Kraftfahrzeugs zu diesen Zeitpunkten entgegengerichtet.

Wie bereits erwähnt, ist die Geschwindigkeit V_{Gt0} des Veränderungs-Grenzbereichs G zum Zeitpunkt t = t0 gleich null, da sich das Kraftfahrzeug K noch im Stillstand befindet. Zu einem Zeitpunkt t = t3 existiert der Veränderungs-Grenzbereich G nicht mehr, da sich dieser bereits entgegen der Fahrtrichtung F aus dem Kraftfahrzeug K herausbewegt hat.

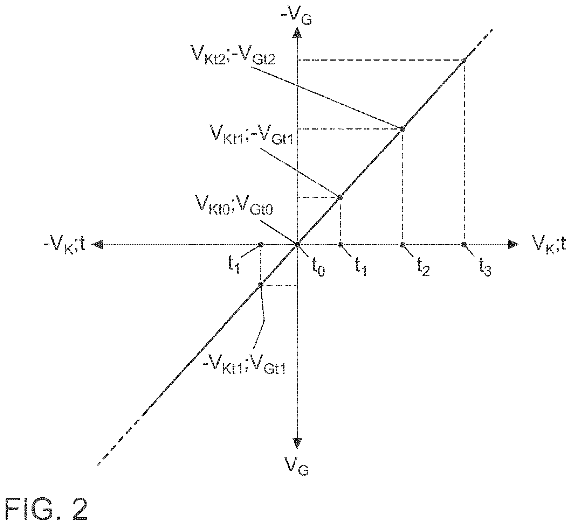

Anhand der Fig. 2 soll verdeutlicht werden, dass die Geschwindigkeit V_{G} des Veränderungs-Grenzbereichs G zu allen Zeitpunkten t0 bis t3 der Fahrgeschwindigkeit V_{K} betragsmäßig gleich oder zumindest in etwa gleich ist. So entspricht zu einem Zeitpunkt t = t1 eine Fahrgeschwindigkeit V_{Kt1} des Kraftfahrzeugs K betragsmäßig einer Geschwindigkeit V_{Gt1} des Veränderungs-Grenzbereichs G. Zu einem Zeitpunkt t = t2 entspricht die Fahrgeschwindigkeit V_{Kt2} betragsmäßig ebenfalls der Geschwindigkeit V_{Gt2} des Veränderungs-Grenzbereichs G und so weiter.

Dies führt dazu, dass eine Person P, welche seitlich auf das Kraftfahrzeug K blickt, den Eindruck hat, dass der Veränderungs-Grenzbereich G stillsteht und das Kraftfahrzeug K förmlich aus dem beleuchteten Teil LE1 des Lichterscheinungsbildes LE herausfährt.

Analog wird das erfindungsgemäße Verfahren durchgeführt, wenn das Kraftfahrzeug K in eine entgegengesetzte Fahrtrichtung F (Rückwärtsfahrt, gestrichelter Pfeil) fährt. In diesem Fall ergibt sich jedoch ein Veränderungs-Grenzbereich G', welcher am gegenüberliegenden Ende des Lichterscheinungsbildes LE beginnt (vgl. Fig. 1).

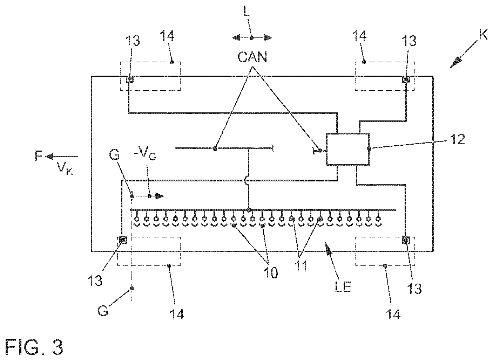

Die Fig. 3 zeigt beispielhaft eine technische Ausführung des Kraftfahrzeugs K, damit es zur Durchführung des erfindungsgemäßen Verfahrens geeignet ist. Es sind dabei nur die für das Verständnis der Erfindung wesentlichen Elemente dargestellt.

So sind Leuchtbereiche 10 ersichtlich, welche sich entlang einer Längsrichtung L des Kraftfahrzeugs K erstrecken. Die Leuchtbereiche 10 sind im vorliegenden Fall als Streuoptiken ausgebildet, welche Leuchtmitteln 11 in Form von lichtemittierenden Dioden (LEDs) optisch nachgeschaltet sind. Die Leuchtmittel 11 sind insbesondere als sogenannte RGB-LEDs ausgebildet, so dass die Leuchtmittel 11 und damit die Leuchtbereiche 10 Licht in verschiedenen, gewünschten Farben abstrahlen können.

Eine Steuereinrichtung 12 ist signaltechnisch mit Radsensoren 13 von Rädern 14 verbunden. Die Steuereinrichtung 12 kann Signale der Radsensoren 13 auswerten und daraus auf Richtung und Höhe einer Fahrzeuggeschwindigkeit schließen. In Abhängigkeit davon können die Leuchtmittel 11 durch die Steuereinrichtung 12 angesteuert werden.

Im vorliegenden Ausführungsbeispiel sei angenommen, dass das Kraftfahrzeug K aus dem Stand mit einer Geschwindigkeit V_{K} in einer Fahrtrichtung F losfährt. Die Fahrtrichtung F kann einer gewöhnlichen Fahrtrichtung (also Vorwärts) oder auch einer Rückwärtsfahrt entsprechen.

Ausgehend vom Stillstand des Kraftfahrzeugs K, in dem sämtliche Leuchtmittel 11 bestromt werden und somit auch sämtliche Leuchtbereiche 10 leuchten, wird somit durch die Leuchtbereiche 10 ein Lichterscheinungsbild LE ausgebildet.

Sobald das Kraftfahrzeug K losfährt, werden die Leuchtmittel 11 durch die Steuereinrichtung 12 sequentiell nacheinander angesteuert. Die Leuchtmittel 11 sind über einen CAN-Bus mit der Steuereinrichtung 12 signaltechnisch verbunden. Die Ansteuerung erfolgt nun in der Weise, dass in einem Veränderungs-Grenzbereich G ein erstes Leuchtmittel 11 ausgeschaltet wird, anschließend das entgegen der Fahrtrichtung F nächstliegende, und so weiter, bis schließlich auch das letzte, in der Figur ganz rechts liegende Leuchtmittel angeschaltet ist. Zusätzlich erfolgt die Geschwindigkeit des Abschaltens so, dass der Veränderungs-Grenzbereich G sich mit einer solchen Geschwindigkeit V_{G} entgegen der Fahrtrichtung F bewegt, die betragsmäßig der Fahrgeschwindigkeit V_{K} entspricht oder zumindest in etwa entspricht.

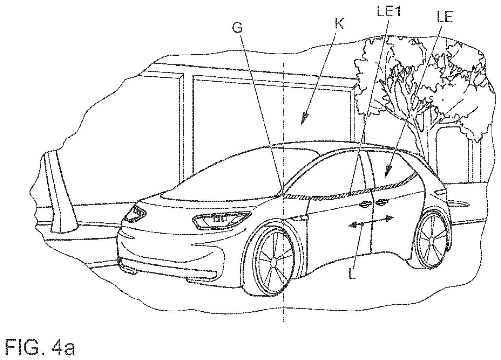

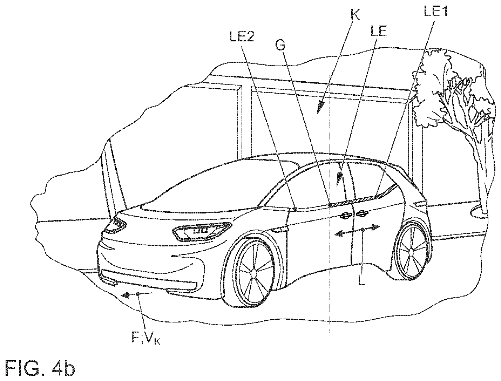

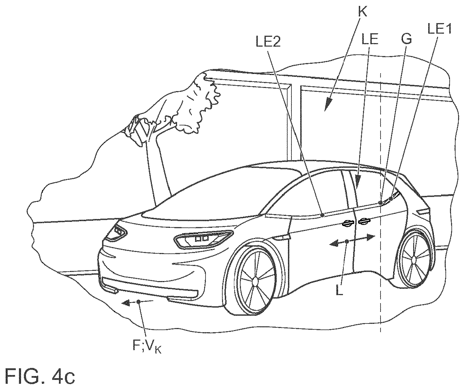

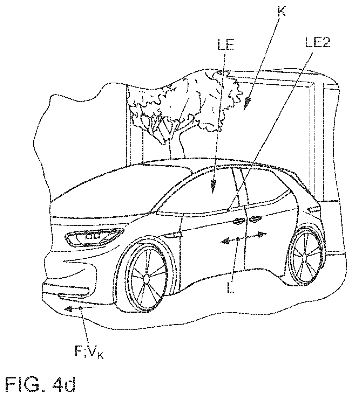

Anhand der Figuren 4 wird nunmehr ein Beispiel eines nicht erfindungsgemäßes Kraftfahrzeugs K beschrieben, bei dem das Lichterscheinungsbild LE linienartig entlang einer Fensterbrüstung verläuft.

So befindet sich das Kraftfahrzeug K zunächst im Stillstand (Fig. 4a) und es wird ein Lichterscheinungsbild LE einzig und allein durch einen leuchtenden Teil LE1 gebildet. Ein Veränderungs-Grenzbereich G befindet sich noch vorne im Bereich einer A-Säule. Nach dem Losfahren des Kraftfahrzeugs K mit einer Geschwindigkeit V_{K} in eine Fahrtrichtung F (Fig. 4b) bewegt sich der Veränderungs-Grenzbereich G entlang einer Längsrichtung L des Kraftfahrzeugs K entgegen der Fahrtrichtung F, so dass ausgehend von der A-Säule ein nicht leuchtender Teil LE2 und rechtsseitig des Veränderungs-Grenzbereichs G ein leuchtender Teil LE1 entstehen. Kurze Zeit später (Fig. 4c) ist der Veränderungs-Grenzbereich G weiter nach hinten entgegen der Fahrtrichtung F verrückt, so dass der unbeleuchtete Teil LE2 des Lichterscheinungsbildes LE nun bereits um ein Vielfaches größer ist als der beleuchtete Teil LE1. Schließlich (Fig. 4d) ist der Veränderungs-Grenzbereich G soweit nach hinten entgegen der Fahrtrichtung F verschoben, dass das Lichterscheinungsbild LE nur noch durch den unbeleuchteten Teil LE2 gebildet ist und somit die Fensterbrüstung nicht mehr beleuchtet wird. Anstatt des Ein- und Ausschaltens der Leuchtmittel zur Erzeugung eines beleuchteten Teils LE1 und eines unbeleuchteten Teils LE2 kann die Ansteuerung der Leuchtmittel auch derart erfolgen, dass in einer analogen Weise ein Teil LE1 mit einer ersten Farbe und ein Teil LE2 mit einer zweien Farbe erzeugt werden.

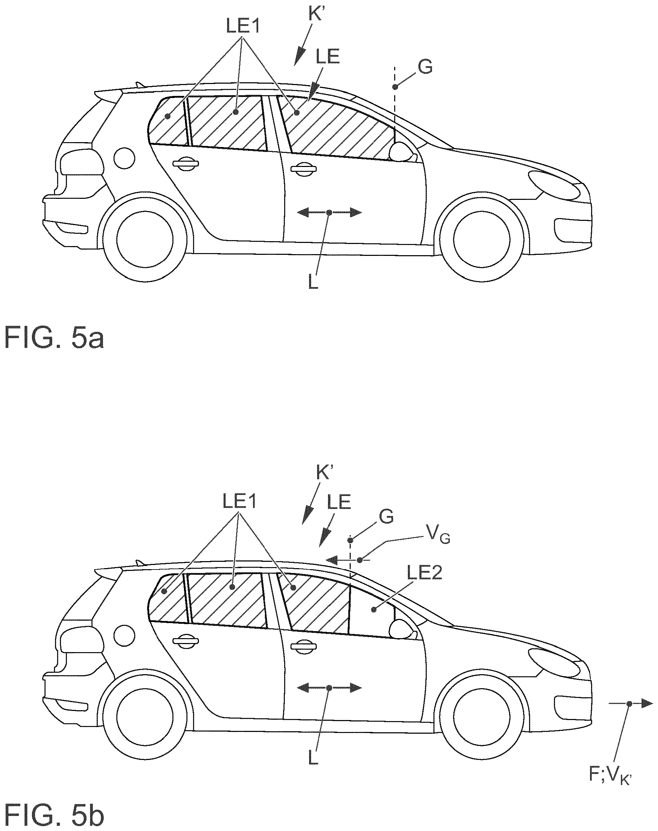

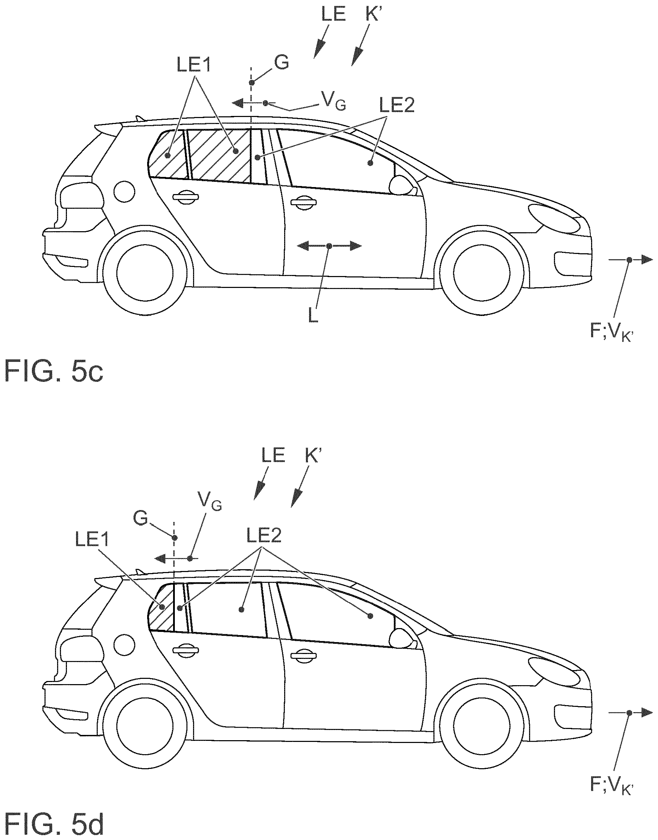

In den Figuren 5 wird ein Ausführungsbeispiel eines Kraftfahrzeugs K' dargestellt, bei dem ein Lichterscheinungsbild LE in den Flächen der Seitenscheiben erzeugt und verändert wird. Danach werden im stehenden Fahrzeug (Fig. 5a) zunächst die kompletten Seitenscheiben derart erhellt, dass ein Lichterscheinungsbild LE entsteht, welches ausschließlich aus einem beleuchteten Teil LE1 besteht. Beim Start des Kraftfahrzeugs K' und einer Geschwindigkeit V_{K'} in einer Fahrtrichtung F wird ein im Bereich eines Außenspiegels befindlicher Veränderungs-Grenzbereich G mit einer Geschwindigkeit V_{G} entgegen der Fahrtrichtung F in Längsrichtung L des Kraftfahrzeugs K' bewegt. So entsteht ein nicht leuchtender Teil LE2 des Lichterscheinungsbildes LE und wiederum ein leuchtender Teil LE1 (Fig. 5b). Kurze Zeit später (Fig. 5c) ist der "Lichtvorhang" bereits soweit aufgezogen, dass sich der Veränderungs-Grenzbereich G im hinteren Fenster befindet und der nicht leuchtende Teil LE2 vom Lichterscheinungsbild LE bereits deutlich größer ist als der leuchtende Teil LE1. in der Fig. 5d ist ein Zustand dargestellt, bei dem sich der Veränderungs-Grenzbereich G kurz vor dem Herausbewegen aus dem hintersten Seitenfenster befindet.

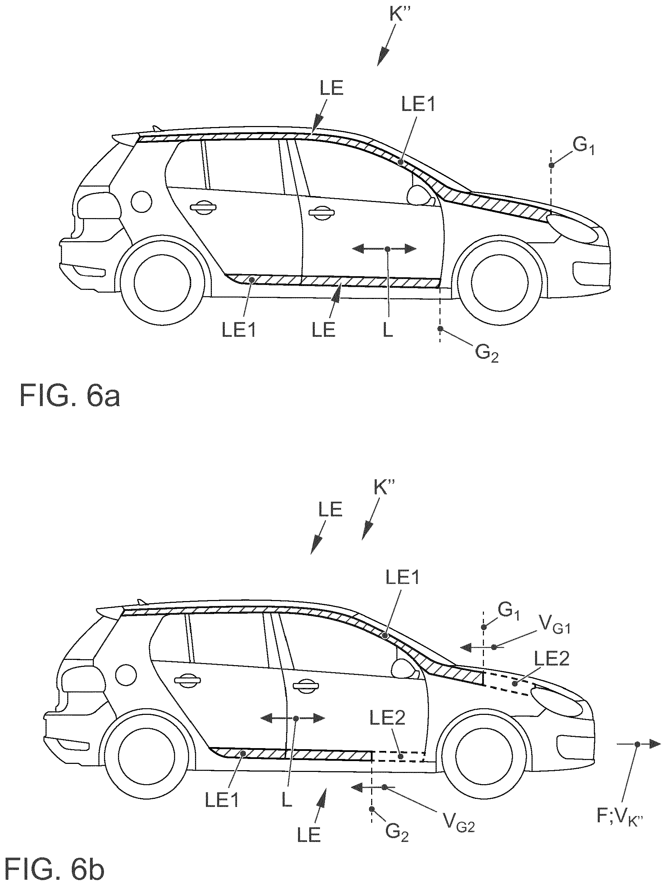

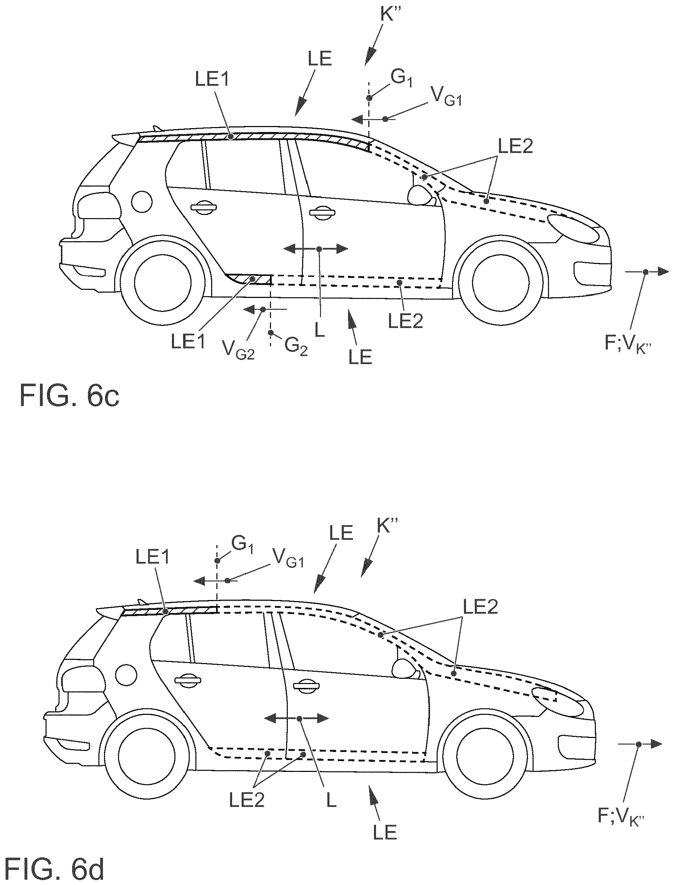

Schließlich soll anhand der Figuren 6 noch ein Beispiel eines nicht erfindungsgemäßes Kraftfahrzeugs K" beschrieben werden, bei dem sich ein Lichterscheinungsbild LE in Längsrichtung L entlang eines oberen Karosserie-Straks des Kraftfahrzeugs K" erstreckt. Ein weiteres Lichterscheinungsbild LE ist entlang eines unteren, zierleistenartigen Anbauteils im Bereich der Türschweller vorhanden.

Ausgehend von einem Stillstand des Kraftfahrzeugs K" (Fig. 6a) sind ein erster Veränderungs-Grenzbereich G1 und ein zweiter Veränderungs-Grenzbereich G2 dargestellt. Sobald das Kraftfahrzeug K" mit einer Geschwindigkeit V_{K"} in einer Fahrtrichtung F losfährt (Fig. 6b), bewegen sich die Veränderungs-Grenzbereiche G1 und G2 mit Geschwindigkeiten V_{G1} und V_{G2} entgegen der Fahrtrichtung F. Dabei sind die Geschwindigkeiten V_{G1} und V_{G2} gleich groß und entsprechen im Betrag wiederum jeweils der Geschwindigkeit V_{K"}. Der Abstand der Veränderungs-Grenzbereiche G1 und G2 in Längsrichtung L bleibt also in etwa konstant, wie auch aus der Fig. 6c zu ersehen ist. Schließlich haben sich die Veränderungs-Grenzbereiche G1 und G2 soweit entgegen der Fahrtrichtung F bewegt, dass der untere Veränderungs-Grenzbereich G2 bereits aus dem unteren Lichterscheinungsbild LE verschwunden ist, während der obere Veränderungs-Grenzbereich G1 das obere Lichterscheinungsbild LE noch in einen kleineren, beleuchteten Teil LE1 und einen größeren, unbeleuchteten Teil LE2 unterteilt. Dies setzt sich so lange fort, bis auch der obere Veränderungs-Grenzbereich G1 vollends aus dem Kraftfahrzeug K" verschwunden ist.

### Bezugszeichenliste

- 10: Leuchtbereiche
- 11: Leuchtmittel; LEDs
- 12: Steuereinrichtung
- 13: Radsensoren
- 14: Räder

- CAN: CAN-Bus
- F: Fahrtrichtung
- G, G': Veränderungs-Grenzbereich
- G1, G2: Veränderungs-Grenzbereich
- K, K', K": Kraftfahrzeug
- L: Längsrichtung
- LE: Lichterscheinungsbild
- LE1: Teil des Lichterscheinungsbildes
- LE2: Teil des Lichterscheinungsbildes
- P: Person
- t: Zeit
- t0-t3: Zeitpunkte
- v_{G}, v_{G1}, v_{G2}: Geschwindigkeit der Veränderungs-Grenzbereiche
- v_{Gt0-} v_{Gt2}: Geschwindigkeit des Veränderungs-Grenzbereichs zu einem bestimmten Zeitpunkt
- v_{K}, v_{K'}, vK": Geschwindigkeit des Kraftfahrzeugs
- v_{Kt0-} v_{Kt3}: Geschwindigkeit des Kraftfahrzeugs zu einem bestimmten Zeitpunkt

## Patentansprüche

1. Verfahren zum Betreiben einer von außen sichtbaren Beleuchtung eines Kraftfahrzeugs (K) mit Seitenfenstern, wobei der Betrieb derart erfolgt, dass eine Vielzahl von Leuchtbereichen (10) sequentiell nacheinander derart verändert wird, dass in Bezug auf das Kraftfahrzeug (K) ein sich wenigstens in einer Längsrichtung (L) des Kraftfahrzeugs (K) kontinuierlich veränderndes Lichterscheinungsbild (LE) erzeugt wird, dass die sequentielle Veränderung der Leuchtbereiche (10) bei einem Losfahren des Kraftfahrzeugs (K) derart erfolgt, dass sich das Lichterscheinungsbild (LE) mit zumindest einem Veränderungs-Grenzbereich (G, G', G1, G2) in Bezug auf das Kraftfahrzeug (K) entgegen dessen momentanen Fahrtrichtung (F) bewegt, wobei ein Veränderungs-Grenzbereich ein solcher Bereich ist, in dem sich ein bestimmter Leuchtbereich gerade von einem bestimmten Zustand in einen anderen Zustand verändert, **dadurch gekennzeichnet, dass** Leuchtbereiche (10) innerhalb der Flächen der Seitenfenster sequentiell verändert werden und
die sequentielle Veränderung der Leuchtbereiche (10) mit einer momentanen Fahrgeschwindigkeit (v_{K}, v_{K'},v_{K"}) des Kraftfahrzeugs (K) derart synchronisiert wird, dass in Bezug auf das Kraftfahrzeug (K) eine Geschwindigkeit (v_{G}, v_{G1}, v_{G2}) des sich entgegen der momentanen Fahrtrichtung (F) bewegenden Veränderungs-Grenzbereichs (G, G', G1, G2) der momentanen Fahrgeschwindigkeit (v_{K}, v_{K'},v_{K"}) entspricht.

2. Verfahren nach Anspruch 1, **dadurch gekennzeichnet, dass** die sequentielle Veränderung der Leuchtbereiche (10) durch ein Ausschalten der Leuchtbereiche (10) bewirkt wird.

3. Verfahren nach Anspruch 1, **dadurch gekennzeichnet, dass** die sequentielle Veränderung der Leuchtbereiche (10) durch eine Erhöhung oder Reduzierung der Lichtintensität der Leuchtbereiche (10) oder durch einen Wechsel von einer bestimmen Farbe in eine andere bestimmte Farbe der Leuchtbereiche (10) bewirkt wird.

4. Verfahren nach einem der vorhergehenden Ansprüche, **dadurch gekennzeichnet, dass** wenigstens entlang einer seitlichen Fensterlinie vorhandene Leuchtbereiche (10) sequentiell verändert werden.

5. Verfahren nach einem der vorhergehenden Ansprüche, **dadurch gekennzeichnet, dass** wenigstens in einem seitlichen Strakverlauf vorhandene Leuchtbereiche (10) sequentiell verändert werden.

6. Verfahren nach einem der vorhergehenden Ansprüche, **dadurch gekennzeichnet, dass** wenigstens Leuchtbereiche (10) von seitlichen Anbauteilen sequentiell verändert werden.

7. Kraftfahrzeug (K), mit Seitenfenstern, zur Durchführung des Verfahrens nach einem der vorhergehenden Ansprüche, mit einer Vielzahl von Leuchtbereichen (10) entlang einer Längsrichtung (L) des Kraftfahrzeugs (K), durch die in Bezug auf das Kraftfahrzeug (K) ein sich in Längsrichtung (L) des Kraftfahrzeugs (K) kontinuierlich veränderndes Lichterscheinungsbild (LE) erzeugbar ist, mit wenigstens eine Steuereinrichtung (12) zur sequentiellen Ansteuerung von Leuchtmitteln (11) zur Veränderung der Leuchtbereiche (10), wobei durch die Steuereinrichtung (12) Signale wenigstens eines Radsensors (13) derart auswertbar sind, dass die Steuereinrichtung (12) die Ansteuerung der Leuchtmittel (11) bei einem Losfahren des Kraftfahrzeugs (K) derart durchführt, dass sich das Lichterscheinungsbild (LE) in Bezug auf das Kraftfahrzeug (K) mit zumindest einem Veränderungs-Grenzbereich (G, G', G1, G2) entgegen dessen momentanen Fahrtrichtung (F) bewegt, wobei ein Veränderungs-Grenzbereich ein solcher Bereich ist, in dem sich ein bestimmter Leuchtbereich gerade von einem bestimmten Zustand in einen anderen Zustand verändert, **dadurch gekennzeichnet, dass** die Seitenfenster des Kraftfahrzeuges (K) die Leuchtbereiche (10) bilden, und
durch die Steuereinrichtung (12) die Signale des Radsensors (13) derart auswertbar sind, dass die Steuereinrichtung (12) die Ansteuerung der Leuchtmittel (11) bei einem Losfahren des Kraftfahrzeugs (K) derart durchführt, dass in Bezug auf das Kraftfahrzeug (K) eine Geschwindigkeit (v_{G}, v_{G1}, v_{G2}) des sich entgegen der momentanen Fahrtrichtung (F) bewegenden Veränderungs-Grenzbereichs (G, G', G1, G2) der momentanen Fahrgeschwindigkeit (V_{K}) entspricht.

## Claims

1. Method for operating the externally visible lighting of a motor vehicle (K) with side windows, wherein the operation is carried out in such a way that a multiplicity of luminous regions (10) are sequentially varied one after the other in such a way that a light effect image (LE) continuously varying relative to the motor vehicle (K) at least in a longitudinal direction (L) of the motor vehicle (K) is produced, the sequential variation of the luminous regions (10) is carried out when the motor vehicle (K) is driving away in such a way that the light effect image (LE) moves with at least one change boundary region (G, G', G1, G2) relative to the motor vehicle (K) in the opposite direction to the current direction of travel (F) thereof, wherein a change boundary region is a region in which a defined luminous region just changes from one defined state to another state, **characterized in that** luminous regions (10) within the areas of the side windows are varied sequentially, and the sequential variation of the luminous regions (10) is synchronized with a current speed of travel (v_{K}, v_{K'},v_{K"}) of the motor vehicle (K) in such a way that relative to the motor vehicle (K) a speed (v_{G}, v_{G1}, v_{G2}) of the change boundary region (G, G', G1, G2) moving in the opposite direction to the current direction of travel (F) corresponds to the current speed of travel (v_{K}, v_{K'},v_{K"}).

2. Method according to Claim 1, **characterized in that** the sequential variation of the luminous regions (10) is brought about by switching off the luminous regions (10).

3. Method according to Claim 1, **characterized in that** the sequential variation of the luminous regions (10) is brought about by an increase or reduction in the light intensity of the luminous regions (10) or by a change from one defined colour to another defined colour of the luminous regions (10).

4. Method according to any one of the preceding claims, **characterized in that** luminous regions (10) disposed at least along a lateral window line are varied sequentially.

5. Method according to any one of the preceding claims, **characterized in that** luminous regions (10) disposed at least in a lateral strake run are varied sequentially.

6. Method according to any one of the preceding claims, **characterized in that** at least luminous regions (10) of lateral attachments are varied sequentially.

7. Motor vehicle (K) with side windows for carrying out the method according to any one of the preceding claims, with a multiplicity of luminous regions (10) along a longitudinal direction (L) of the motor vehicle (K), by means of which a light effect image (LE) continuously varying relative to the motor vehicle (K) in the longitudinal direction (L) of the motor vehicle (K) can be produced, with at least one control device (12) for sequentially actuating luminous means (11) for the variation of the luminous regions (10), wherein signals of at least one wheel sensor (13) can be analysed by the control device (12) in such a way that the control device (12) actuates the luminous means (11) when the motor vehicle (K) is driving way in such a way that the light effect image (LE) moves with at least one change boundary region (G, G', G1, G2) relative to the motor vehicle (K) in the opposite direction to the current direction of travel (F) thereof, wherein a change boundary region is a region in which a defined luminous region just changes from one defined state to another state, **characterized in that** the side windows of the motor vehicle (K) form the luminous regions (10), and the signals of the wheel sensor (13) can be analysed by the control device (12) in such a way that the control device (12) actuates the luminous means (11) when the motor vehicle (K) is driving away in such a way that a speed (v_{G}, v_{G1}, v_{G2}) relative to the motor vehicle (K) of the change boundary region (G, G', G1, G2) moving in the opposite direction to the current direction of travel (F) corresponds to the current speed of travel (V_{K}).

## Revendications

1. Procédé pour faire fonctionner un éclairage visible de l'extérieur d'un véhicule automobile (K) comprenant des fenêtres latérales,
le fonctionnement s'effectuant de telle sorte qu'une pluralité de zones d'éclairage (10) sont modifiées séquentiellement l'une après l'autre de telle sorte qu'un aspect lumineux (LE) qui varie continuellement dans une direction longitudinale (L) du véhicule automobile (K) est généré, la modification séquentielle des zones d'éclairage (10) lors d'un démarrage du véhicule automobile (K) s'effectuant de telle sorte que l'aspect lumineux (LE) se déplace en sens inverse de sa direction de déplacement (F) momentanée avec au moins une zone limite de modification (G, G', G1, G2) en référence au véhicule automobile (K), une zone limite de modification étant une zone dans laquelle une zone d'éclairage déterminée est en train de changer d'un état déterminé en un autre état,
**caractérisé en ce que** les zones d'éclairage (10) sont modifiées séquentiellement à l'intérieur des surfaces des fenêtres latérales et
la modification séquentielle des zones d'éclairage (10) est synchronisée avec une vitesse de déplacement (v_{K}, v_{K'}, v_{K"}) momentanée du véhicule automobile (K) de telle sorte qu'en référence au véhicule automobile (K), une vitesse (v_{G}, v_{G1}, v_{G2}) de la zone limite de modification (G, G', G1, G2) qui se déplace en sens inverse de la direction de déplacement (F) momentanée correspond à la vitesse de déplacement (v_{K}, v_{K'}, v_{K"}) momentanée.

2. Procédé selon la revendication 1, **caractérisé en ce que** la modification séquentielle des zones d'éclairage (10) est produite par une mise hors circuit des zones d'éclairage (10).

3. Procédé selon la revendication 1, **caractérisé en ce que** la modification séquentielle des zones d'éclairage (10) est produite par une augmentation ou une réduction de l'intensité lumineuse des zones d'éclairage (10) ou par un changement d'une couleur déterminée en une autre couleur déterminée des zones d'éclairage (10).

4. Procédé selon l'une des revendications précédentes, **caractérisé en ce qu'**au moins les zones d'éclairage (10) qui se trouvent le long d'une ligne de fenêtre latérale sont modifiées séquentiellement.

5. Procédé selon l'une des revendications précédentes, **caractérisé en ce qu'**au moins les zones d'éclairage (10) qui se trouvent dans un tracé de virure latérale sont modifiées séquentiellement.

6. Procédé selon l'une des revendications précédentes, **caractérisé en ce qu'**au moins les zones d'éclairage (10) de composants rapportés latéraux modifiées séquentiellement.

7. Véhicule automobile (K), comprenant des fenêtres latérales, destiné à mettre en œuvre un procédé selon l'une des revendications précédentes, comprenant une pluralité de zones d'éclairage (10) le long d'une direction longitudinale (L) du véhicule automobile (K), par lesquelles un aspect lumineux (LE) qui varie continuellement dans une direction longitudinale (L) du véhicule automobile (K) peut être généré en référence au véhicule automobile (K), comprenant au moins un dispositif de commande (12) destiné à commander séquentiellement des sources lumineuses (11) en vue de modifier les zones d'éclairage (10), les signaux d'au moins un capteur radar (13) pouvant être interprétés par le dispositif de commande (12) de telle sorte que le dispositif de commande (12) effectue la commande des sources lumineuses (11) lors d'un démarrage du véhicule automobile (K) de telle sorte que l'aspect lumineux (LE) se déplace en sens inverse de sa direction de déplacement (F) momentanée avec au moins une zone limite de modification (G, G', G1, G2) en référence au véhicule automobile (K), une zone limite de modification étant une zone dans laquelle une zone d'éclairage déterminée est en train de changer d'un état déterminé en un autre état, **caractérisé en ce que** les fenêtres latérales du véhicule automobile (K) forment les zones d'éclairage (10) et les signaux du capteur radar (13) peuvent être interprétés par le dispositif de commande (12) de telle sorte que le dispositif de commande (12) effectue la commande des sources lumineuses (11) lors d'un démarrage du véhicule automobile (K) de telle sorte qu'en référence au véhicule automobile (K), une vitesse (v_{G}, v_{G1}, v_{G2}) de la zone limite de modification (G, G', G1, G2) qui se déplace en sens inverse de la direction de déplacement (F) momentanée correspond à la vitesse de déplacement (v_{K}) momentanée.
